# EUROPEAN PATENT APPLICATION

(11) **EP 4 571 619 A1**
(43) Date of publication of application: **18.06.2025**
(21) Application number: 23216297.4
(22) Date of filing: 13.12.2023
(51) Int. Cl.: G06Q 20/06, G06Q 20/38

(54) **TOKEN REGISTER, TOKEN REGISTRATION/DELETION CHECK SYSTEM, ELECTRONIC TOKEN TRANSACTION SYSTEM, AND METHOD FOR REGISTERING/DELETING A TOKEN OF AN ELECTRONIC TOKEN TRANSACTION SYSTEM**

(71) Applicant: Giesecke+Devrient advance52 GmbH, 81677 München (DE)
(72) Inventor: HUPEL, Lars, 81677 München (DE); RIEDL, Teresa, 81677 München (DE)
(74) Representative: Ter Meer Steinmeister & Partner

(57) **Abstract**

A token register (100) of an electronic token transaction system (TS), comprising a token register storage unit (101) for registering/deleting at least one token of the electronic token transaction system (TS), a token registration/deletion request receiving unit (102) for receiving at least one token registration/deletion request from at least one user (D) or from at least one external token registration/deletion check system (200), a providing unit (103) for providing at least one token registration/deletion check request to at least one external token registration/deletion check system (200), and a receiving unit (104) for receiving at least one token registration/deletion check response from the at least one external token registration/deletion check system (200).

## Description

The invention relates to a token register of an electronic token transaction system. The invention also refers to a token registration/deletion check system. The invention also relates to an electronic token transaction system in particular an electronic payment transaction system. The invention also relates to a method for registering/ deleting a token of an electronic token transaction system. This invention is preferably directed to register freshly minted tokens and/or to delete existing tokens.

In electronic transaction systems there are electronic transactions provided. Electronic transactions, such as electronic payment transactions, can be made on an account-based model or a token-based model. A transaction in the account-based model triggers nodes to decrement the balance of the payer's account and to increment the balance of the payee's account. Alternatively, in a token-based model, tokens are directly (or indirectly) transferred between payer and payee, e.g. using electronic wallets (hereinafter also referred to as token transaction units) etc. Both models are applicable within this disclosure.

Tokens - also referred to as digital assets, electronic coins, coin data sets - may represent any digital asset, in particular a digital currency, preferably a central bank digital currency, short CBDC. These tokens are minted (e.g. created) by an issuing unit. These tokens are melted (e.g. destroyed) by the issuing unit or a dismissing unit of the token transaction system. The issuing unit and/or dismissing unit may be an issuing authority, or a central bank unit or a commercial bank unit. Each minted or to-be-melted token comprises at least a monetary value (v) and a token reference (r) as token data element but is not limited thereto.

There are different technical approaches for exchanging such electronic tokens within the electronic tokens transaction system.

In each of these different approaches, it must be guaranteed that the electronic token transactions and/or a storage of tokens and any associated transaction data and/or storage data in an electronic token transaction system is safe, secure, and so, means for protecting confidentiality, privacy, integrity, and availability of exchanged and/or stored token data must be implemented. This is especially true for electronic payment transactions and associated payment transactions and payment storages in which a monetary value is linked with each token.

In conventional electronic token transaction systems, based on security reasons, tokens can only be minted, i.e. created, or melted, i.e. destroyed, by central authorized agencies like a token issuer and/or the central bank, CB. In this context, the term "minting" includes a generation or creation of a new token that has not been present in the entire transaction system and the registration of the generated new token, in particular the registration of the token reference of the generated new token, in the token register. In this context, the term "melting" includes a destruction, removal or withdrawal of a token and the deletion of the token within the entire transaction system, in particular the deletion of the token reference of the to-be-deleted token, in the token register. Therefore, in conventional electronic token transaction systems, users, e.g. financial service provider like commercial banks or merchants or end users, being directly linked with their user transaction units, are not able to mint or melt a token of the electronic token transaction system. The users are only authorized to modify existing tokens of the electronic token transaction system. Since the minting and melting of the token in the electronic transaction system is actually centralized, there is a need to provide a decentral possibility for minting or melting a token of an electronic token transaction system by the at least one user without disregarding security aspects.

The above-identified objectives are solved with the features of the independent patent claims. Further advantageous embodiments are described in the dependent patent claims.

In an aspect of the present invention there is provided a token register. The token register of an electronic token transaction system, comprises a token register storage unit for registering/ deleting at least one token of the electronic token transaction system, a token registration/ deletion request receiving unit for receiving at least one token registration/ deletion request from at least one user or from at least one external token registration/ deletion check system, a providing unit for providing at least one token registration/ deletion check request to at least one external token registration/ deletion check system, and a receiving unit for receiving at least one token registration/ deletion check response from the at least one external token registration/ deletion check system.

The token register is especially suitable for registration of freshly minted tokens issued by a central issuing unit but that have not been used in the transaction system.

The token register is especially suitable for deletion of to-be-melted tokens that should be melted by a central issuing unit for destroying the token within the transaction system.

The token register may represent any unit of an electronic token transaction unit being configured for registering respectively verifying or deleting a token, in particular registering, verifying, or deleting a token reference (r) of a valid token of the electronic token transaction system from or in the token register. In other words, the registration or deletion of the token in the token register, based on security-, verification- and registration-purposes, is provided by storing only the token reference (TR), e.g. the monetary value and a public part (R) of a token-individual cryptographic key pair (r, R), of all valid (also freshly minted) tokens in the token register without knowing the tokens itself, i.e. without knowing the private part (r) of a token-individual cryptographic key pair (r, R) etc.. So, the user can check validity of a received token with dedicated requests send to the token register. Tokens can be further modified by each user of the electronic token transaction system, e.g., ownership of tokens can be switched from one user to another user (SWITCH modification), tokens can be split into plural tokens, e.g., for obtaining a token with a reduced monetary value (SPLIT modification) and/or plural tokens can be merged to a single token, e.g., for obtaining a token with a higher monetary value (MERGE modification). Digital signatures are used to further enhance the security. The token register may include respectively comprise at least one token register storage unit. Additionally, the token register may include respectively comprise at least one token registration/ deletion request receiving unit, at least one providing unit, at least one receiving unit, at least one internal token minting/melting check unit, and at least one registration/ deletion response providing unit, but is not limited thereto. The token register may be directly or indirectly communicatively couples to the at least one user and/or to the at least one external token registration/ deletion check system but is not limited thereto.

The at least one token register storage unit may be any unit being configured for storing and therefore registering at least one token, in particular at least one token reference of at least one valid token, of the electronic token transaction system. The valid token is preferably a freshly minted but not yet registered token. Additionally, the token register storage unit may be configured for deleting or cancelling at least one registered token, i.e. at least one token reference of the at least one token registered in the token register, of the electronic token transaction system. The registered token is preferably a to-be-melted token. For instance, the at least one token register storage unit may include a processing unit and a data storage or a memory. The processing unit may be configured for providing a registration, i.e. storing, and a deletion or cancellation of the at least one token, in particular token reference, of the electronic token transaction system in the data storage or memory. The data storage or the memory may be included in the token register or may be arranged external to the token register, wherein the data storage or memory is directly communicatively coupled to the processing unit but is not limited thereto.

The at least one token registration/ deletion request receiving unit, i.e. token registration request receiving unit and/or token deletion request receiving unit, may represent any unit being configured for receiving at least one token registration/ deletion request from at least one user or from at least one external token registration/deletion check system. The token registration/ deletion request receiving unit may be directly or indirectly communicatively coupled to the at least one user or to the at least one external token registration/deletion check system but is not limited thereto.

The token registration/ deletion request, i.e. token registration and/or deletion request, may be any question, query or request leading to, initiating or asking for a registration or deletion of a token, in particular a token reference, in the token register. The token registration/ deletion request may be a request for completing the minting process, namely that a freshly minted token (valid) is registered in the token register for future token transactions. The token registration/ deletion request may be a request for initiating the melting process, namely that a registered token (valid) is destroyed within the token transaction systems so that no future transactions can be performed with this registered token. The token registration/ deletion request may include a string or an integer but is not limited thereto. The token registration/deletion request may be created or generated by the at least one user or by the at least one external token registration/ deletion check system. The token registration/ deletion request may be provided or transmitted from the at least one user or from the at least one external token registration/ deletion check system to the token register. The token registration/ deletion request may comprise, in case of a registration request, at least a CREATE command (i.e. a command initiating the creation of a token respectively the registration of a token in the token register) or, in case of a deletion request, at least a DELETE command (i.e. a command initiating the destruction of a token respectively deletion of a registered token from the token register), but is not limited thereto. The CREATE command may include a value (v), a public key (R) of a token-individual cryptographic key pair, and a signature of a token issuer, but is not limited thereto. The DELETE command may include a value (v), a public key (R) of a token-individual cryptographic key pair, a signature of a private key that corresponds to the public key (R) of the token-individual cryptographic key pair, and a signature of the token issuer, but is not limited thereto. Additionally, the token registration/deletion request may further comprise a token reference of the to be registered or deleted token, a monetary value of the to be registered or deleted token and/or a registration/ deletion reference. The registration/ deletion reference may be any data indicating a reference to an entry of the external token registration/deletion check system. For instance, the registration/ deletion reference within a Ethereum system may include an Ethereum-transactions-ID, i.e. a string comprising a hexadecimal number, a requesting entity (Commercial Bank A according to LEI/NPI-standard), a budget/contingent/quota, an approving entity (Central Bank according to LEI/NPI-standard), and a timestamp but is not limited thereto.

The term "user" as used herein may represent any financial service provider like banks or transaction units of the end user that take part in respectively are members of the electronic token transaction system. The user may be an authorized user being authorized by checking his integrity etc.. The user does not represent any central authorized agency like a token issuer and/or the central bank.

The at least one providing unit of the token register may represent any unit being configured for providing at least one token registration/ deletion check request to the at least one external token registration/ deletion check system. The providing unit may be directly or indirectly communicatively coupled to the at least one external token registration/deletion check system but is not limited thereto.

The token registration/ deletion check request, i.e. the token registration and/or deletion check request, may be any question, query or request leading to, initiating or asking for a checking or proving if a registration of a token in the token register or a deletion of a token in the token register is granted or denied, i.e. fulfills at least one registration/ deletion right. The token registration/ deletion check request may include a string or an integer but is not limited thereto. The decision if a registration or deletion of a token in the token register is granted or denied is provided respectively executed by the external token registration/ deletion check system. Additionally, the token registration/ deletion check request may be any question, query or request leading to, initiating or asking for a checking or proving if the received token registration/ deletion request is complete and/or correct. Such a checking or proving may be provided by comparing the received token registration/ deletion request with an allowable sample or reference token registration/ deletion request but is not limited thereto. For instance, the token minting/melting check request may include the data included in the token registration/deletion request but is not limited thereto. For instance, the registration/ deletion reference check request within the Ethereum system may be a JSON-RPC-request, such as "eth_getTransactionByHash" or "eth_getTransactionReceipt" that provides back the Ethereum-transactions-ID as parameter. The registration/ deletion reference check request provides a record with information of the transaction (e.g. which token, e.g. smart contract was requested and what was the result of that request). The register now can compare that information with the predefined information, e.g. which token is allowed/admissible and can also compare it with information provided by the user in the registration request, e.g. the monetary value (v) etc.

The token registration/ deletion check request may be provided respectively transmitted from the token register to the external token registration/deletion check system. The token registration/deletion check request may be generated or created by the token register.

The at least one receiving unit of the token register may be any unit being configured for receiving at least one token registration/ deletion check response from the at least one external token registration/ deletion check system. The receiving unit is directly or indirectly communicatively coupled to the external token registration/deletion check system.

The token registration/deletion check response, i.e. token registration and/or deletion check response, may include any data indicating information about the result of the checking or proving if a registration of a token in the token register or a deletion of a token in the token register is granted or denied. The token registration/ deletion check response may include an integer or a string but is not limited thereto. For instance, the token registration/deletion check response may include "token registration/deletion granted" or "token registration/deletion denied" but is not limited thereto. Based on the token registration/ deletion check response, the at least one token is registered in or deleted from the token register storage unit respectively from the token register.

The at least one internal token minting/melting check unit, i.e. internal token minting and/or melting check unit, may be any unit configured for checking an integrity and/or a cryptographic element of the at least one user or of the at least one external token registration/ deletion check system. In this context, the cryptographic element may be a cryptographic key but is not limited thereto. The integrity may be provided by a certificate but is not limited thereto. The checking of the integrity and/or the cryptographical element may be provided by proving, matching or correlation, i.e. comparing, integrity data and/or cryptographical elements being provided together with the token registration/ deletion request with reference integrity data and/or complementary cryptographical elements but is not limited thereto. The term "internal" may represent that the internal token minting/melting check unit is located, arranged, or included in/within respectively is included in the token register. In case the internal token minting/ melting check unit identifies that a token registration/ deletion request is provided by respectively received by a trustable user or external token registration/ deletion check system, the received token registration/ deletion request is considered, executed, or initiates a token registration or a token deletion. In case the internal token minting/ melting check unit identifies that a token registration/ deletion request is provided by respectively received by a not-trustable user or external token registration/ deletion check system, the received token registration/ deletion request is rejected respectively will not executed, and not considered.

The at least one registration/ deletion response providing unit, i.e. registration and/or deletion response providing unit, may be any unit configured for providing respectively transmitting at least one registration/ deletion response from the token register to the at least one user. The registration/ deletion response may include any information indicating the result of the registration/ deletion of the at least one token of the electronic token transaction system in the token register. For instance, the registration/deletion response may be "registration/deletion accomplished respectively granted" and "registration/deletion denied" but is not limited thereto.

The external token registration/ deletion check system, i.e. external token registration and/or deletion check system, may represent any system being configured for checking respectively proving, and therefore providing the decision, if a registration or deletion of at least one token in the token register is granted or denied. The term "external" may represent that the external token registration/ deletion check system is located outside of the token register and therefore is not included in the token register. The external token registration/ deletion check system respectively token registration/ deletion check system of an electronic token transaction system may comprise a receiving unit, a token registration/ deletion grant or denial unit, a response transmitting unit, a registration/ deletion query receiving unit, a registration/ deletion query providing unit, and a registration/ deletion query response providing unit but is not limited thereto. Further, the external token registration/ deletion check system may also comprise at least one internal token minting/melting check unit as described above. The token register is external to the token registration/deletion check system, i.e. the token registration/ deletion system is not included in the token register.

The receiving unit of the token registration/ deletion check system may represent any unit being configured for receiving at least one token registration/ deletion check request from at least one token register. The receiving unit may be directly or indirectly communicatively coupled to the token register but is not limited thereto.

The token registration/ deletion grant or denial unit, i.e. token registration and/or deletion grant or denial unit, may represent any unit being configured for granting or denying the registration of the token in the token register or the deletion of the token in the token register as requested by the received at least one token registration/ deletion check request. The decision if a token minting or token melting is granted or denied may be provided by comparing, matching or correlating the data included in the token registration/ deletion request with data of at least one registration/ deletion right.

The registration/deletion right, i.e. registration and/or deletion right, may grant a limited right to register or delete a token to or from the token register. In a first example, the registration/ deletion right may be a right published and granted by an external registration/ deletion right providing unit. The external registration/ deletion right providing unit may be any unit which provides a registration/ deletion right to the token registration/ deletion grant or denial unit or to the token registration/ deletion check system. The term "external" represents that the external registration/ deletion right providing unit is neither included in the token register nor in the token registration/ deletion check system. For instance, the external registration/ deletion right providing unit may be a registration/ deletion right providing authority like the central bank but is not limited thereto. For instance, the registration/ deletion right may be a budget/contingent/quota, a limited time, a complex workflow including a plurality of approvals, and a majority voting but is not limited thereto. The registration/deletion right may be published respectively stored in a distributed ledger system but is not limited thereto. The distributed ledger system may be arranged located or comprised in the external token registration/ deletion check system, in particular in the token registration/deletion grant or denial unit but is not limited thereto. In a second example, the registration/ deletion right may be an existence of a registration/ deletion transaction in a distributed ledger system. The registration/ deletion transaction may be created by at least two other users. Each of the at least two other user may represent a node of the distributed ledger system. In other words, the registration/ deletion right may be any registration/ deletion transaction being allowed or denied by a majority decision of the at least two users. Alternatively, the registration/ deletion transaction may be created by at least two other token registers but is not limited thereto. Beside the transaction respectively transaction kind, other characteristics like name of the user etc. can be used for providing the registration/deletion right. In a third example, the registration/ deletion right is an existence of an amount, e.g. monetary amount in a token, to be created in the electronic token transaction system being deleted in another electronic token transaction system or vice versa. In other words, the registration/ deletion right defines that a registration or a deletion of a token in the token register is only granted when the amount to be granted in the electronic token transaction system is deleted or added to the other electronic token transaction system. The registration/ deletion right may be permanently stored and may be linked to an identity of the at least one user. The registration/ deletion right may be consumable, i.e. will be deleted after the token registration or token deletion.

The response transmitting unit may represent any unit configured for transmitting respectively providing a token registration/ deletion check response to the at least one token register. The token registration/ deletion check response may be based on the result of the token registration/deletion grant or denial unit but is not limited thereto. The response transmitting unit may be directly or indirectly communicatively coupled to the receiving unit of the token register but is not limited thereto.

The token registration/deletion check response, i.e. token registration and/or deletion check response, may include any information indicating the result of the registration/ deletion checking of the token registration/ deletion check system, in particular the token registration/ deletion grant or denial unit. For instance, the registration/ deletion check response may be "registration/deletion is granted to be executed" and "registration/ deletion is denied to be executed" but is not limited thereto.

The registration/deletion query receiving unit, i.e. registration and/or deletion query receiving unit, may represent any unit being configured for receiving a registration/ deletion query from the at least one user. The registration/ deletion query receiving unit may be directly or indirectly communicatively coupled to the at least one user.

The registration/ deletion query, i.e. registration and/or deletion query, may be any data indicating, notice, or preparing the external token registration/ deletion check system to receive a token registration/ deletion check request and/or to initiate or leading the external token registration/ deletion check system to generate a token registration/ deletion query and to provide respectively transmit the token registration/ deletion query to the at least one token register. The token registration/ deletion query may be any data triggering, initiating the token register to generate a token registration/ deletion check request and to provide the token registration/ deletion check request to the token registration/deletion check system. The registration/ deletion query and the token registration/ deletion query may include an integer or a string but is not limited thereto. The registration/ deletion query may be generated or created by the at least one user.

The token registration/ deletion query providing unit, i.e. token registration and/or deletion query providing unit, may represent any unit configured for providing the token registration/ deletion query to the at least one token register. The token registration/ deletion query providing unit may be directly or indirectly communicatively coupled to the at least one token register.

The registration/ deletion query response providing unit, i.e. registration and/or deletion query response providing unit, may represent any unit being configured for providing at least one registration/deletion query response to the at least one user. The registration/ deletion query response providing unit may be directly or indirectly communicatively coupled to the at least one user but is not limited thereto.

The registration/deletion query response, i.e. registration and/or deletion query response, may include any information indicating the result of the registration/ deletion query, in particular if the registration/deletion query was received. Additionally or alternatively, the registration/deletion query response may comprise an integer or a string but is not limited thereto. For instance, the registration/ deletion query response may include "query successfully transmitted" and "query not successfully transmitted" but is not limited thereto.

The registration/deletion right receiving unit, i.e. registration and/or deletion right receiving unit, may represent any unit configured for receiving at least one registration/ deletion right from the external registration/ deletion right providing unit.

The registration/deletion right receiving unit may be directly or indirectly communicatively coupled to the external registration/ deletion right providing unit but is not limited thereto. The external registration/ deletion right providing unit may be the central bank but is not limited thereto.

By receiving at least one token registration/ deletion request from at least one user and providing the at least one token registration/ deletion check request to at least one external token registration/ deletion check system, a decentral possibility for minting and melting tokens of an electronic token transaction system by the users is enabled. In this context, the security aspects are not disregarded.

In a preferred embodiment of the token register, the token register further comprises an internal token minting/melting check unit for checking an integrity and/or a cryptographic element of the at least one user or the at least one external token registration/deletion check system.

By checking the integrity of the at least one user or the at least one external token registration/ deletion check system, it can be ensured that token registration/ deletion requests provided by respectively received by only trustable users or external token registration/ deletion check systems are considered, executed, affect the token register or initiate registration or deletion of a token.

In a preferred embodiment of the token register, the token register further comprises a registration/ deletion response providing unit for providing at least one registration/ deletion response to the at least one user.

By providing a registration/deletion response to the at least one user, it is reliable provided that the user is informed immediately about the result of the registration/ deletion, i.e. if the registration/ deletion was successful or not. Thereby, the user can immediately check on the registration/ deletion and react on a non-desired result of the registration/ deletion.

In a preferred embodiment of the token register, the token registration/ deletion request comprises a CREATE command, a DELETE command, a token reference, a monetary value of the token and/or a registration/ deletion reference.

In another aspect of the invention there is provided a token registration/ deletion check system of an electronic token transaction system. The token registration/deletion check system comprises a receiving unit for receiving at least one token registration/ deletion check request from at least one token register being external to the token registration/ deletion check system, and a token registration/ deletion grant or denial unit for granting or denying the token registration or deletion as requested by the received at least one token registration/ deletion check request.

In a preferred embodiment of the token registration/ deletion check system, the token registration/ deletion check system further comprises a response transmitting unit for transmitting a token registration/ deletion check response to the at least one token register, wherein the token registration/ deletion check response is based on the result of the token registration/ deletion grant or denial unit.

In a preferred embodiment of the token registration/ deletion check system, the token registration/ deletion check system further comprises a registration/ deletion query receiving unit for receiving a registration/ deletion query from the at least one user, and a token registration/ deletion query providing unit for providing a token registration/ deletion query to the at least one token register.

In a preferred embodiment of the token registration/ deletion check system, the token registration/ deletion check system further comprises a registration/ deletion query response providing unit for providing at least one registration/ deletion query response to the at least one user.

In a preferred embodiment of the token registration/ deletion check system, the token registration/ deletion grant or denial unit includes at least one registration/ deletion right for granting a limited right to register a token to/ delete a token from the token register.

In a preferred embodiment of the token registration/ deletion check system, the registration/deletion right is a right published and granted by an external registration/deletion right providing unit, preferably in a distributed ledger system.

In a preferred embodiment of the token registration/ deletion check system, the registration/ deletion right is an existence of a registration/ deletion transaction in a distributed ledger system, wherein the registration/ deletion transaction is created by at least two other users.

In a preferred embodiment of the token registration/ deletion check system, the registration/ deletion right is an existence of an amount to be created in the electronic token transaction system being deleted in another electronic token transaction system and vice versa.

In a preferred embodiment of the token registration/ deletion check system, the token registration/ deletion check system further comprises a registration/ deletion right receiving unit for receiving at least one registration/ deletion right from the external registration/ deletion right providing unit.

In another aspect of the invention there is provided an electronic token transaction system. The system comprises at least one user, a token register as described above, and a token registration/ deletion check system as described above.

In another aspect of the invention there is provided a method for registering/ deleting a token of an electronic token transaction system. The method comprises the steps of receiving by a token register a token registration/ deletion request form at least one user or from at least one external token registration/ deletion check system, providing a token registration/ deletion check request from the token register to at least one external token registration/ deletion check system, checking by the at least one external token registration/ deletion check system if the token registration/ deletion request fulfills at least one registration/ deletion right, providing a token registration/ deletion check response indicating a result of the checking to the token register, and registering or deleting at least one token of the electronic token transaction system in the token register.

In further aspect of the invention there is provided a method for minting/melting a token of an electronic token transaction system. The method comprises the steps of generating a token by the at least one user, generating a token registration/ deletion request by the at least one user, receiving by a token register a token registration/ deletion request form at least one user or from at least one external token registration/ deletion check system, providing a token registration/ deletion check request from the token register to at least one external token registration/ deletion check system, checking by the at least one external token registration/ deletion system if the token registration/ deletion request fulfills at least one registration/ deletion right, providing a token registration/ deletion check response indicating a result of the checking to the token register, and registering or deleting at least one token of the electronic token transaction system in the token register.

In a preferred embodiment of the method, the method further comprises the step of checking an integrity and/or a cryptographic element of the at least one user or of the at least one external token registration/deletion check system by an internal token minting/melting check unit before providing a token registration/ deletion check request from the token register to at least one external token registration/ deletion check system.

In a preferred embodiment of the method, the method further comprises the step of receiving by a registration/ deletion right receiving unit of the at least one external token registration/ deletion check system at least one registration/ deletion right from an external registration/ deletion right providing unit.

In a preferred embodiment of the method, the method further comprises the step of receiving from the at least one user a registration/ deletion query by a registration/ deletion query receiving unit of the token registration/ deletion check system and providing by a token registration/ deletion query providing unit a token registration/ deletion query to the at least one token register.

In a preferred embodiment of the method, the method further comprises the step of providing by a registration/ deletion query response providing unit at least one registration/ deletion query response from the token registration/ deletion check system to the at least one user.

In a preferred embodiment of the method, the method further comprises the step of providing by a registration/ deletion response providing unit at least one registration/ deletion response from the token register to the at least one user.

In a preferred embodiment of the method, the method further comprises the step of issuing or destroying by the at least one user at least one token registered in the token register.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows an exemplary embodiment of a token register of the present invention.
Fig. 2 shows an exemplary embodiment of a token registration/ deletion check system of the present invention.
Fig. 3 shows an exemplary embodiment of an electronic token transaction system of the present invention.
Fig. 4 shows an exemplary embodiment of a method for registering/ deleting a token of an electronic token transaction system of the present invention.
Fig. 5 shows a prior art embodiment of a method for minting/melting a token of an electronic token transaction system.
Fig. 6 shows a first variant of an embodiment of a method for minting/melting a token of an electronic token transaction system comprising the method for registering/ deleting a token of an electronic token transaction system of the present invention.
Fig. 7 shows a second variant of an embodiment of a method for minting/melting a token of an electronic token transaction system comprising the method for registering/ deleting a token of an electronic token transaction system of the present invention.
Fig. 8 shows a third variant of an embodiment of a method for minting/melting a token of an electronic token transaction system comprising the method for registering/ deleting a token of an electronic token transaction system of the present invention.

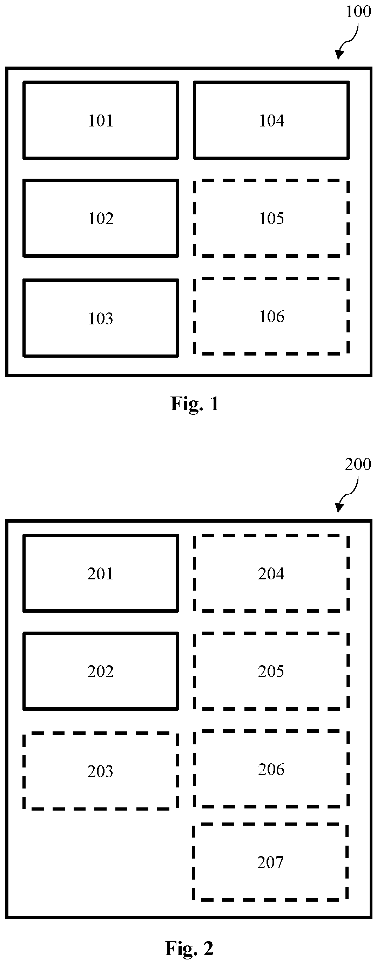

In Fig. 1 there is depicted an exemplary embodiment of a token register of the present invention. The token register 100 comprises a token register storage unit 101. The token register storage unit 101 is configured for registering at least one token of the electronic token transaction system. The token register further comprises a token registration/deletion request receiving unit 102 configured for receiving at least one token m registration/deletion request from at least one user U or from at least one external token registration/ deletion system 200. Further, the token register 100 comprises a providing unit 103 and a receiving unit 104. The providing unit 103 is configured for providing at least one token registration/ deletion check request to at least one external token registration/ deletion check system and the receiving unit 104 for receiving at least one token registration/ deletion check response from the at least one external token registration/deletion check system 200. The token register storage unit 101 may be directly or indirectly communicatively coupled to the registration/ deletion request receiving unit 102, the receiving unit 104 and the providing unit 103.

Optionally, the token register 100 comprises an internal token registration/ deletion check unit 105. The internal token registration/ deletion check unit 105 is configured for checking an integrity and/or a cryptographic element of the at least one user U or the at least one external token registration/deletion check system 200.

Optionally, the token register 100 comprises a registration/ deletion response providing unit 106, the registration/ deletion response providing unit 106 is configured for providing at least one registration/ deletion response to the at least one user U.

All units of the token register may be directly or indirectly communicatively coupled to each other.

In Fig. 2, there is depicted an exemplary embodiment of a token registration/ deletion check system of the present invention. The token registration/ deletion check system 200 comprises a receiving unit 201 and a token registration/ deletion grant or denial unit (202). The receiving unit 201 is configured for receiving at least one token registration/ deletion check request from at least one token register 100 being external to the token registration/ deletion check system 200. The token registration/ deletion grant or denial unit 202 is configured for granting or denying the token registration/ deletion as requested by the received at least one token registration/ deletion check request. The receiving unit 201 is directly or indirectly communicatively coupled to the token registration/ deletion grant or denial unit 202.

Optionally, the token registration/ deletion check system 200 comprises a response transmitting unit 203. The response transmitting unit 203 is configured for transmitting a token registration/ deletion check response to the at least one token register.

Optionally, the token registration/deletion check system 200 comprises a registration/ deletion query receiving unit 204 configured for receiving a registration/ deletion query from the at least one user U and a token registration/ deletion query providing unit 205 configured for providing a token registration/ deletion query to the at least one token register 100.

Optionally, the token registration/deletion check system 200 comprises a registration/ deletion query response providing unit 206. The registration/ deletion query response providing unit 206 is configured for providing at least one registration/ deletion query response to the at least one user U.

Optionally, the token registration/deletion check system 200 comprises a registration/ deletion right receiving unit 207. The registration/ deletion right receiving unit 207 is configured for receiving at least one registration/deletion right from the external registration/ deletion right providing unit 300.

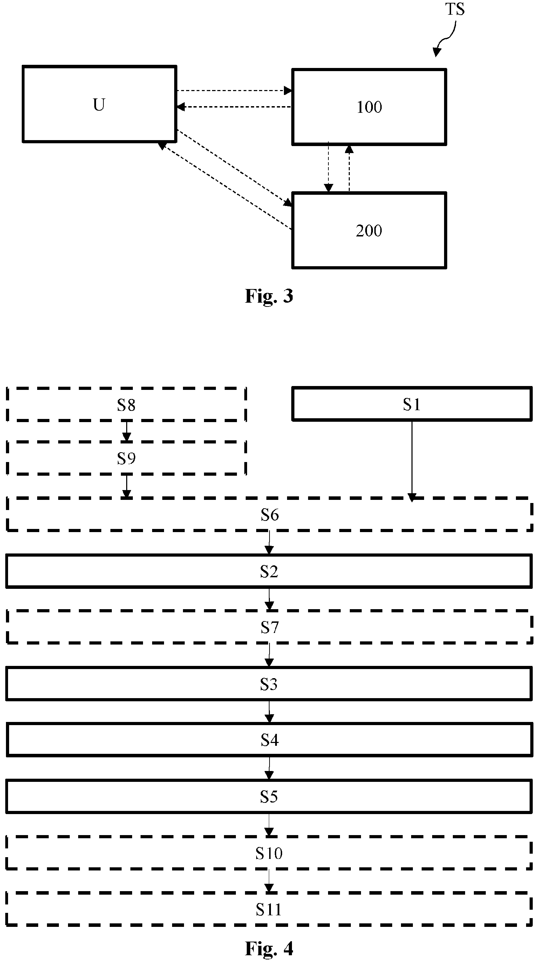

In Fig. 3, there is depicted an exemplary embodiment of an electronic token transaction system of the present invention. The electronic token transaction system TS comprises at least one user U, at least one token register 100 as described above in Fig. 1, and at least one token registration/ deletion check system 200 as described above in Fig. 2.

Fig. 4 shows an exemplary embodiment of a method for registering/ deleting a token of an electronic token transaction system of the present invention. In a first step S1 of the method, a token registration/ deletion request is received form at least one user U or from at least one external token registration/deletion check system 200 by a token register 100. The token register 100 generates a token register check request based on the received token registration/ deletion request. In a second step S2, a token registration/ deletion check request is provided from the token register 100 to at least one external token registration/deletion check system 200. In a third step S3, it is checked by the at least one external token registration/ deletion check system 200 if the token registration/ deletion request fulfills at least one registration/deletion right. In a fourth step S4, a token registration/deletion check response, provided by the at least one external token registration/ deletion check system 200, indicating a result of the checking is provided to the token register 100. In a fifth step S5, at least one token of the electronic token transaction system is registered or deleted in the token register 100.

Optionally, between the first step S1 and the second step S2, in particular before the second step S2, the method further comprises a sixth step S6. In the sixth step S6, an integrity and/or a cryptographic element of the at least one user U is checked by an internal token minting/melting check unit 105.

Optionally, between the second step S2 and the third step S3, the method further comprises a sept step S7. In the sept step S7, at least one registration/deletion right is received by the at least one external token registration/ deletion check system 200 from an external registration/ deletion right providing unit 300.

Optionally, in an eight step S8 of the method, a registration/ deletion query is received from the at least one user U by a registration/ deletion query receiving unit 204 of the token registration/ deletion check system 200 and by a registration/ deletion query providing unit 205 a token registration/ deletion query to the at least one token register (100).

Optionally, in a nineth step S9, at least one registration/ deletion query response is provided by a registration/ deletion query response providing unit 206 from the token registration/ deletion check system 200 to the at least one user U.

Optionally, in a tenth step S10 of the method, at least one registration/ deletion response is provided by a registration/ deletion response providing unit 106 from the token register 100 to the at least one user U.

Optionally, in an eleventh step S11 of the method, at least one token registered in the token register 100 is issued or destroyed by the at least one user U.

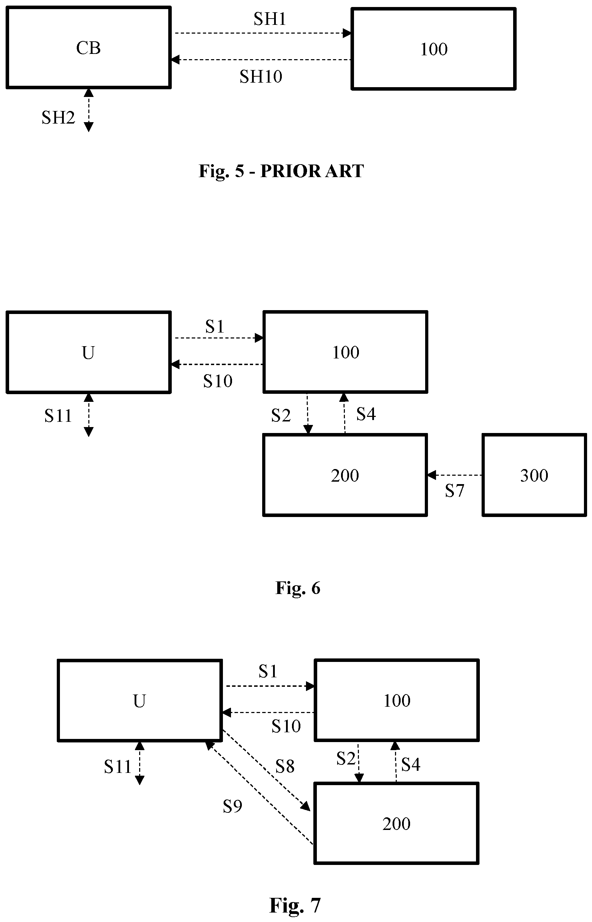

Fig. 5 shows a prior art embodiment of a method for minting/melting a token of an electronic token transaction system.

In a conventional method for minting a token, a central authority like the central bank CB generates a token, generates a token registration request, and provides respectively transmits the token registration request to the token register 100. The token register 100 only accepts the token registration request, in particular the CREATE command, e.g.

CREATE(v=123,R=0x456,sig_issuer=0xABC), included in the token registration request, being signed, e.g. by a key, by the central bank CB. When the token register has registered the at least one token, the token register 100 provides at least one registration response to the central bank CB, wherein the registration response indicates that the registration was granted or denied, see SH10. In case the registration was denied, the token is not registered in the token register and no token is minted by the central bank. In case the registration was granted, the token is registered in the token register and a token is minted by the central bank see step SH2.

Alternatively, in a conventional method for melting a token a central authority like the central bank CB generates a token, generates a token deletion request, and provides respectively transmits, in a first step SH1, a token deletion request to the token register 100. The token register 100 only accepts the token deletion request, in particular the DELETE command, e.g. DESTROY(v=123,R=0x456,sig_r=0xABC,sig_issuer=0xDEF) ,included in the token deletion request, being signed, e.g. by a key, by the central bank CB. When the token register has deleted the at least one token, the token register 100 provides at least one deletion response to the central bank CB, wherein the deletion response indicates that the deletion was granted or denied, see SH10. In case the deletion was denied, the token is not deleted in the token register and no token is melting by the central bank. In case the deletion was granted, the token is deleted in the token register and a token is melted by the central bank, see step SH2.

Fig. 6 shows a first variant of an embodiment of a method for minting/melting a token of an electronic token transaction system comprising the method for registering/ deleting a token of an electronic token transaction system of the present invention.

In the first variant of an embodiment of the method for minting a token of an electronic token transaction system, the at least one user U generates a token, generates a token registration request, and transmits respectively provides a token registration request to the token register 100, see step S1. The token register 100 receives the token registration request. Optionally, not shown in Fig. 6, the token register 100 checks the integrity and/or cryptographic elements of the at least one user U by an internal token minting check unit in order to check or prove if the received token registration request is received from a trustable user. In a second step S2, the token register 100 provides a token registration check request to at least one external token registration check system 200. The external token registration check system 200 receives the token registration check request from the token register 100 and checks if the token registration request, in particular the data included in the token registration check request, fulfills at least one registration right. For the checking proceeding, the external token registration check system 200 comprises a token registration grant or denial unit 202, not shown. The registration right is receiving, see step S7, by the at least one external token registration check system 200 via a registration right receiving unit 207 from an external registration right providing unit 300. In case the token registration grant or denial unit 202 decides that the token registration check request does not fulfill the at least one registration right, the registration of the token in the token register 100 is denied. In case the token registration grant or denial unit 202 decides that the token registration check request fulfills the at least one registration right, the registration of the token in the token register 100 is granted. The result of the checking is provided, see step S4, as a token registration check response to the token register 100. Based on the received result of the checking provided in the token registration check response, at least one token, i.e. the requested token, of the electronic token transaction system is registered in the token register 100. When the token is registered in the token register, the token register 100 providers via a registration response providing unit 106, not shown, at least one registration response to the at least one user U. The at least one registration response indicates that the registration of the token in the token register and therefore the minting of the token was successful. The at least one user U receives the at least one registration response and issues the registered token.

Alternatively, in the first variant of an embodiment of the method for melting a token of an electronic token transaction system, the at least one user U generates a token, generates a token deletion request, and transmits respectively provides a token deletion request to the token register 100, see step S1. The token register 100 receives the token deletion request. Optionally, not shown in Fig. 6, the token register 100 checks the integrity and/or cryptographic elements of the at least one user U by an internal token melting check unit in order to check or prove if the received token deletion request is received from a trustable user. In a second step S2, the token register 100 provides a token deletion check request to at least one external token deletion check system 200. The external token deletion check system 200 receives the token deletion check request from the token register 100 and checks if the token deletion request, in particular the data included in the token deletion check request, fulfills at least one deletion right. For the checking proceeding, the external token deletion check system 200 comprises a token deletion grant or denial unit 202, not shown. The deletion right is receiving, see step S7, by the at least one external token deletion check system 200 via a deletion right receiving unit 207 from an external deletion right providing unit 300. In case the token deletion grant or denial unit 202 decides that the token deletion check request does not fulfill the at least one deletion right, the deletion of the token in the token register 100 is denied. In case the token deletion grant or denial unit 202 decides that the token deletion check request fulfills the at least one deletion right, the deletion of the token in the token register 100 is granted. The result of the checking is provided, see step S4, as a token deletion check response to the token register 100. Based on the received result of the checking provided in the token deletion check response, at least one token, i.e. the requested token, of the electronic token transaction system is deleted in the token register 100. When the token is deleted in the token register, the token register 100 provides via a deletion response providing unit 106, not shown, at least one deletion response to the at least one user U. The at least one deletion response indicates that the deletion of the token in the token register and therefore the melting of the token was successful. The at least one user U receives the at least one deletion response and deletes the token registered in the token register.

Fig. 7 shows a second variant of an embodiment of a method for minting/melting a token of an electronic token transaction system comprising the method for registering/ deleting a token of an electronic token transaction system of the present invention.

In the second variant of an embodiment of the method for minting a token of an electronic token transaction system, the at least one user U generates a token, generates a token registration request, and transmits respectively provides a token registration request to the token register 100, see step S1. Additionally, the user U provides a registration query to the token registration check system 200. The providing of the registration query may be executed at the same time or at a different time as the providing of a token registration request. The token register 100 receives the token registration request. Optionally, not shown in Fig. 6, the token register 100 checks the integrity and/or cryptographic elements of the at least one user U by an internal token minting check unit in order to check or prove if the received token registration request is received from a trustable user. The token registration check system 200 receives the registration query. Optionally, not shown in Fig. 6, the token registration check system 200 also checks the integrity and/or cryptographic elements of the at least one user U by an internal token minting query check unit in order to check or prove if the received registration query is received from a trustable user. When the registration query is received by the token registration check system 200, at least one registration query response is provided by a registration query response providing unit 206 of the token registration check system 200 to the at least one user U. In a second step S2, the token register 100 provides a token registration check request to at least one external token registration check system 200. The external token registration check system 200 receives the token registration check request from the token register 100 and checks if the token registration request, in particular the data included in the token registration check request, fulfills at least one registration right. For the checking proceeding, the external token registration check system 200 comprises a token registration grant or denial unit 202, not shown. The registration right is an existence of a registration transaction in a distributed ledger, wherein the registration transaction is created by at least two other user. In case the token registration grant or denial unit 202 decides that the token registration check request does not fulfill the at least one registration right, the registration of the token in the token register 100 is denied. In case the token registration grant or denial unit 202 decides that the token registration check request fulfills the at least one registration right, the registration of the token in the token register 100 is granted. The result of the checking is provided, see step S4, as a token registration check response to the token register 100. Based on the received result of the checking provided in the token registration check response, at least one token, i.e. the requested token, of the electronic token transaction system is registered in the token register 100. When the token is registered in the token register, the token register 100 providers via a registration response providing unit 106, not shown, at least one registration response to the at least one user U. The at least one registration response indicates that the registration of the token in the token register and therefore the minting of the token was successful. The at least one user U receives the at least one registration response and issues the registered token.

Alternatively, in the second variant of an embodiment of the method for melting a token of an electronic token transaction system, the at least one user U generates a token, generates a token deletion request, and transmits respectively provides a token deletion request to the token register 100, see step S1. Additionally, the user U provides a deletion query to the token deletion check system 200. The providing of the deletion query may be executed at the same time or at a different time as the providing of a token deletion request. The token register 100 receives the token deletion request. Optionally, not shown in Fig. 6, the token register 100 checks the integrity and/or cryptographic elements of the at least one user U by an internal token melting check unit in order to check or prove if the received token deletion request is received from a trustable user. The token deletion check system 200 receives the deletion query. Optionally, not shown in Fig. 6, the token deletion check system 200 also checks the integrity and/or cryptographic elements of the at least one user U by an internal melting query check unit in order to check or prove if the received deletion query is received from a trustable user. When the deletion query is received by the token deletion system 200, at least one deletion query response is provided by a deletion query response providing unit 206 of the token deletion check system 200 to the at least one user U. In a second step S2, the token register 100 provides a token deletion check request to at least one external token deletion check system 200. The external token deletion check system 200 receives the token deletion check request from the token register 100 and checks if the token deletion request, in particular the data included in the token deletion check request, fulfills at least one deletion right. For the checking proceeding, the external token deletion check system 200 comprises a token deletion grant or denial unit 202, not shown. The deletion right is an existence of a deletion transaction in a distributed ledger, wherein the deletion transaction is created by at least two other users. In case the token deletion grant or denial unit 202 decides that the token deletion check request does not fulfill the at least one deletion right, the deletion of the token in the token register 100 is denied. In case the token deletion grant or denial unit 202 decides that the token deletion check request fulfills the at least one deletion right, the deletion of the token in the token register 100 is granted. The result of the checking is provided, see step S4, as a token deletion check response to the token register 100. Based on the received result of the checking provided in the token deletion check response, at least one token, i.e. the requested token, of the electronic token transaction system is deleted in the token register 100. When the token is deleted in the token register 100, the token register 100 providers via a deletion response providing unit 106, not shown, at least one deletion response to the at least one user U. The at least one deletion response indicates that the deletion of the token in the token register and therefore the melting of the token was successful. The at least one user U receives the at least one deletion response and deletes the registered token.

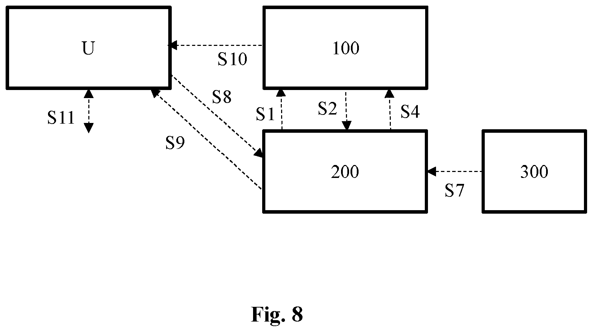

Fig. 8 shows a third variant of an embodiment of a method for minting/melting a token of an electronic token transaction system comprising the method for registering/ deleting a token of an electronic token transaction system of the present invention.

In the third variant of an embodiment of the method for minting a token of an electronic token transaction system, the at least one user U generates a token, generates a registration query, and transmits respectively provides a registration query to the token registration check system 200, see step S8. Optionally, not shown in Fig. 6, the token registration check system 200 also checks the integrity and/or cryptographic elements of the at least one user U by an internal minting query check unit in order to check or prove if the received registration query is received from a trustable user. When the registration query is received by the token registration check system 200, at least one registration query response is provided by a registration query response providing unit 206 of the token registration check system 200 to the at least one user U. The token registration check system 200 creates based on the at least one registration query a token registration request. The token registration check system 200 provides the token registration request to the token register 100, see step S1. The token register 100 receives the token registration request. Optionally, not shown in Fig. 6, the token register 100 checks the integrity and/or cryptographic elements of the at least one user U by an internal token minting check unit in order to check or prove if the received token registration request is received from a trustable user. In a second step S2, the token register 100 provides a token registration check request to at least one external token registration check system 200. The external token registration check system 200 receives the token registration check request from the token register 100 and checks if the token registration request, in particular the data included in the token registration check request, fulfills at least one registration right. For the checking proceeding, the external token registration check system 200 comprises a token registration grant or denial unit 202, not shown. The registration right is the existence of an amount to be created in the electronic token transaction system TS being deleted in another electronic token transaction system ATS and vice versa. In case the token registration grant or denial unit 202 decides that the token registration check request does not fulfill the at least one registration right, the registration of the token in the token register 100 is denied. In case the token registration grant or denial unit 202 decides that the token registration check request fulfills the at least one registration right, the registration of the token in the token register 100 is granted. The result of the checking is provided, see step S4, as a token registration check response to the token register 100. Based on the received result of the checking provided in the token registration check response, at least one token, i.e. the requested token, of the electronic token transaction system is registered in the token register 100. When the token is registered in the token register, the token register 100 providers via a registration response providing unit 106, not shown, at least one registration response to the at least one user U. The at least one registration response indicates that the registration of the token in the token register and therefore the minting of the token was successful. The at least one user U receives the at least one registration response and issues the registered token, see step S11.

Alternatively, in the third variant of an embodiment of the method for melting a token of an electronic token transaction system, the at least one user U generates a token, generates a deletion query, and transmits respectively provides a deletion query to the token deletion check system 200, see step S8. Optionally, not shown in Fig. 6, the token deletion check system 200 also checks the integrity and/or cryptographic elements of the at least one user U by an internal melting query check unit in order to check or prove if the received deletion query is received from a trustable user. When the deletion query is received by the token deletion check system 200, at least one deletion query response is provided by a deletion query response providing unit 206 of the token deletion check system 200 to the at least one user U. The token deletion check system 200 creates based on the at least one deletion query a token deletion request. The token deletion check system 200 provides the token deletion request to the token register 100, see step S1. The token register 100 receives the token deletion request. Optionally, not shown in Fig. 6, the token register 100 checks the integrity and/or cryptographic elements of the at least one user U by an internal token melting check unit in order to check or prove if the received token deletion request is received from a trustable user. In a second step S2, the token register 100 provides a token deletion check request to at least one external token deletion check system 200. The external token deletion check system 200 receives the token deletion check request from the token register 100 and checks if the token deletion request, in particular the data included in the token deletion check request, fulfills at least one deletion right. For the checking proceeding, the external token deletion check system 200 comprises a token deletion grant or denial unit 202, not shown. The deletion right is the existence of an amount to be created in the electronic token transaction system TS being deleted in another electronic token transaction system ATS and vice versa. In case the token deletion grant or denial unit 202 decides that the token deletion check request does not fulfill the at least one deletion right, the deletion of the token in the token register 100 is denied. In case the token deletion grant or denial unit 202 decides that the token deletion check request fulfills the at least one deletion right, the deletion of the token in the token register 100 is granted. The result of the checking is provided, see step S4, as a token deletion check response to the token register 100. Based on the received result of the checking provided in the token deletion check response, at least one token, i.e. the requested token, of the electronic token transaction system is deleted in the token register 100. When the token is deleted in the token register, the token register 100 providers via a deletion response providing unit 106, not shown, at least one deletion response to the at least one user U. The at least one deletion response indicates that the deletion of the token in the token register and therefore the melting the token was successful. The at least one user U receives the at least one deletion response and deletes the registered token, see step S11.

### REFERENCE SIGNS

- 100: token register
- 101: token register storage unit
- 102: token registration/ deletion request receiving unit
- 103: token registration/ deletion check request providing unit
- 104: token registration/ deletion check response receiving unit
- 105: internal token minting/melting check unit
- 106: registration/ deletion response providing unit
- 200: external token registration/deletion check system
- 201: token registration/ deletion check request receiving unit
- 202: token registration/deletion grant or denial unit
- 203: response transmitting unit
- 204: registration/deletion query receiving unit
- 205: registration/ deletion query providing unit
- 206: registration/ deletion query response providing unit
- 207: registration/deletion right receiving unit
- 300: external registration/deletion right providing unit
- U: user
- TS: electronic token transaction system
- ATS: another electronic token transaction system
- S1: receiving step
- S2: providing step
- S3: checking step
- S4: providing step
- S5: registering or deleting step
- S6: checking step
- S7: receiving step
- S8: receiving and providing step
- S9: providing step
- S10: providing step
- S11: issuing or deleting step
- SH1: receiving step
- SH10: providing step
- SH11: issuing or destroying step

## Claims

1. A token register (100) of an electronic token transaction system (TS), comprising:
a token register storage unit (101) for registering/ deleting at least one token of the electronic token transaction system (TS);
a token registration/ deletion request receiving unit (102) for receiving at least one token registration/ deletion request from at least one user (U) or from at least one external token registration/ deletion check system (200);
a providing unit (103) for providing at least one token registration/ deletion check request to at least one external token registration/ deletion check system (200); and
a receiving unit (104) for receiving at least one token registration/ deletion check response from the at least one external token registration/ deletion check system (200).

2. The token register (100) of an electronic token transaction system (TS) according to claim 1, further comprising:
an internal token minting/melting check unit (105) for checking an integrity and/or a cryptographic element of the at least one user (U) or the at least one external token registration/ deletion check system (200).

3. The token register (100) of an electronic token transaction system (TS) according to any preceding claims, further comprising:
a registration/ deletion response providing unit (106) for providing at least one registration/ deletion response to the at least one user (U).

4. The token register (100) of an electronic token transaction system (TS) according to any one of the preceding claims, wherein the token registration/deletion request comprises a CREATE command, a DELETE command, a token reference, a monetary value of the token and/or a registration/ deletion reference.

5. A token registration/deletion check system (200) of an electronic token transaction system (TS), comprising:
a receiving unit (201) for receiving at least one token registration/ deletion check request from at least one token register (100) being external to the token registration/ deletion check system (200); and
a token registration/ deletion grant or denial unit (202) for granting or denying the token registration/ deletion as requested by the received at least one token registration/ deletion check request.

6. The token registration/deletion check system (200) according to claim 5, further comprising:
a response transmitting unit (203) for transmitting a token registration/ deletion check response to the at least one token register (100),
wherein the token registration/ deletion check response is based on a result of the token registration/ deletion grant or denial unit (202).

7. The token registration/ deletion check system (200) according to claims 5 or 6, further comprising:
a registration/ deletion query receiving unit (204) for receiving a registration/ deletion query from the at least one user (U); and
a token registration/ deletion query providing unit (205) for providing a token registration/deletion query to the at least one token register (100).

8. The token registration/ deletion check system (200) according to claims 5 to 7, further comprising:
a registration/ deletion query response providing unit (206) for providing at least one registration/ deletion query response to the at least one user (U).

9. The token registration/ deletion check system (200) according to claims 5 to 8, wherein the token registration/ deletion grant or denial unit (202) includes at least one registration/ deletion right for granting a limited right to register a token to/delete a token from the token register (100).

10. The token registration/ deletion check system (200) according to claim 9, wherein the registration/ deletion right is a right published and granted by an external registration/ deletion right providing unit (300), preferably in a distributed ledger system.

11. The token registration/ deletion check system (200) according to claim 9, wherein the registration/ deletion right is an existence of a registration/ deletion transaction in a distributed ledger system, wherein the registration/ deletion transaction is created by at least two other users.

12. The token registration/ deletion check system (200) according to claim 9, wherein the registration/ deletion right is an existence of an amount to be created in the electronic token transaction system (TS) being deleted in another electronic token transaction system (ATS) and vice versa.

13. The token registration/ deletion check system (200) according to claim 9, further comprising:
a registration/ deletion right receiving unit (207) for receiving at least one registration/ deletion right from the external registration/ deletion right providing unit (300).

14. An electronic token transaction system (TS) comprising:
at least one user (U)
a token register (100) according to claims 1 to 4;
a token registration/ deletion check system (200) according to claims 5 to 13.

15. A method for registering/ deleting a token of an electronic token transaction system (TS), comprising:
receiving (S1) by a token register (100) a token registration/ deletion request form at least one user (U) or from at least one external token registration/ deletion check system (200);
providing (S2) a token registration/ deletion check request from the token register (100) to at least one external token registration/ deletion check system (200);
checking (S3) by the at least one external token registration/ deletion check system (200) if the token registration/ deletion request fulfills at least one registration/ deletion right;
providing (S4) a token registration/ deletion check response indicating a result of the checking to the token register (100); and
registering or deleting (S5) at least one token of the electronic token transaction system in the token register based on the result of the checking.

16. The method for registering/ deleting a token of an electronic token transaction system (TS), according to claim 15, further comprising:
checking (S6) an integrity and/or a cryptographic element of the at least one user (U) or of the at least one external token registration/ deletion check system (200) by an internal token minting/melting check unit (105) before providing (S2) a token registration/ deletion check request from the token register (100) to at least one external token registration/ deletion check system (200).

17. The method for registering/ deleting a token of an electronic token transaction system (TS), according to claims 15 or 16, further comprising:
receiving (S7) by a registration/ deletion right receiving unit (207) of the at least one external token registration/ deletion check system (200) at least one registration/ deletion right from an external registration/ deletion right providing unit (300).

18. The method for registering/ deleting a token of an electronic token transaction system (TS), according to any one of the claims 15 to 17, further comprising:
receiving (S8) from the at least one user (U) a registration/ deletion query by a registration/ deletion query receiving unit (204) of the token registration/ deletion check system (200), and
providing by a registration/ deletion query providing unit (205) a token registration/deletion query to the at least one token register (100).

19. The method for registering/ deleting a token of an electronic token transaction system (TS), according to any one of the claims 15 to 18, further comprising:
providing (S9) by a registration/ deletion query response providing unit (206) at least one registration/ deletion query response from the token registration/ deletion check system (200) to the at least one user (U).

20. The method for registering/ deleting a token of an electronic token transaction system (TS), according to any one of the claims 15 to 19, further comprising:
providing (S10) by a registration/ deletion response providing unit (106) at least one registration/ deletion response from the token register (100) to the at least one user (U).

21. The method for registering/ deleting a token of an electronic token transaction system (TS), according to any one of the claims 15 to 20, further comprising:
issuing or destroying (S11) by the at least one user (U) at least one token registered in the token register (100).
